# EUROPÄISCHE PATENTSCHRIFT

(11) **EP 1 699 341 B1**
(45) Veröffentlichungstag und Bekanntmachung des Hinweises auf die Patenterteilung: **18.04.2018**
(21) Anmeldenummer: 04804790.6
(22) Anmeldetag: 13.12.2004
(51) Int. Cl.: A47L 15/00

(54) **Geschirrspülmaschine mit gleichzeitigem Betrieb der Umwälzpumpe und der Laugenpumpe**
Dishwasher with simultaneous operation of the circulating pump and the drain pump
Lave-vaisselle avec fonctionnement simultané de la pompe de circulation et de la pompe à lessive

(30) Priorität: 23.12.2003 DE 10360905; 27.01.2004 DE 102004004104
(43) Veröffentlichungstag der Anmeldung: 13.09.2006
(73) Patentinhaber: BSH Hausgeräte GmbH, 81739 München (DE)
(72) Erfinder: BEER, Hans, 89441 Medlingen (DE); RIEGER, Roland, 73492 Rainau (DE); WOLF, Christian, 89407 Dillingen (DE)
(86) Internationale Anmeldenummer: PCT/EP2004/053428
(87) Internationale Veröffentlichungsnummer: WO 2005/063108

(56) Entgegenhaltungen:
- EP-A- 0 237 994
- EP-A- 0 998 872
- DE-A1- 2 013 716
- DE-A1- 2 823 493
- FR-A- 1 293 779
- FR-A1- 2 440 726

## Beschreibung

Die Erfindung betrifft ein Verfahren zum Betreiben einer Geschirrspülmaschine mit mindestens einem Spülbehälter, einer Umwälzpumpe zur Förderung von Spülflüssigkeit zu wenigstens einer Sprühvorrichtung zur Beaufschlagung von im Spülbehälter gelagertem, zu reinigendem Spülgut, einer Laugenpumpe zum Abpumpen von Spülflüssigkeit aus der Geschirrspülmaschine und mit einem zumindest aus den Teilprogrammschritten Vorspülen, Reinigen, Zwischenspülen, Klarspülen und Trocknen zusammensetzbaren Spülprogramm. Die Erfindung richtet sich ferner auf eine Geschirrspülmaschine, in der ein Verfahren mit alternierendem Pumpenbetrieb zur Anwendung vorgesehen ist. Das Dokument EP 0 998 872 A beschreibt eine bekannte Geschirrspülmaschine. Geschirrspülmaschinen haben in der Regel zumindest einen Spülbehälter und darin angeordnete Sprühvorrichtungen, wobei die Sprühvorrichtungen mit der von einer Umwälzpumpe geförderten Flüssigkeit beschickt werden, um das im Spülbehälter gelagerte Spülgut mit Spülflüssigkeit zu beaufschlagen. Bei den bekannten Geschirrspülmaschinen sind üblicherweise über ein Programmsteuergerät Spülprogramme wählbar, die beispielsweise aus den Teilprogrammschritten Vorspülen, Reinigen, Zwischenspülen, Klarspülen und Trocknen zusammensetzbar sind. Da sich die Spülflüssigkeit während der Reinigungsphasen mit Spülrückständen anreichert, sind im Wasserkreislauf der Geschirrspülmaschine Filtersysteme vorgesehen, durch die das von der Umwälzpumpe umgewälzte Spülwasser ständig geführt und gereinigt wird.

Die bekannten Geschirrspülmaschinen haben den Nachteil, dass sich die Filtersysteme im Laufe des Spülprogramms mit Spülrückständen zusetzen können. Dies führt zu einer Rückverschmutzung des Spülguts durch Zerkleinerung und Feinverteilung der an den Filtersystemen abgelagerten Spülrückständen und damit zu einer Herabsetzung der Reinigungswirkung der Geschirrspülmaschine. Ferner kann es zu Behinderungen im Kreislauf der Spülflüssigkeit kommen, wodurch die reinigende Funktion Filtersysteme beeinträchtigt wird. Ein weiterer Nachteil besteht darin, dass durch die Behinderungen im Kreislauf der Spülflüssigkeit und durch die Verlängerung des Spülprogramms zur Erzielung eines zufriedenstellenden Spülergebnisses der Energieverbrauch der Geschirrspülmaschine steigt.

Eine Aufgabe der vorliegenden Erfindung ist es daher, ein Verfahren bereitzustellen, mit dem es möglich ist, eine Geschirrspülmaschine so zu betreiben, dass die während der Reinigungsphasen anfallenden Spülrückstände frühzeitig aus der Spülflüssigkeit entfernt und die Filtersysteme der Geschirrspülmaschine automatisch gereinigt werden, bevor es zu einer Überlastung der Filtersysteme kommen kann. Der vorliegenden Erfindung liegt ferner die Aufgabe zugrunde, den Spülprogrammablaufs einer Geschirrspülmaschine so zu gestalten, dass eine möglichst große Einsparung der für den Betrieb der Geschirrspülmaschine erforderlichen Energie bei optimaler Spülleistung erreicht wird. Diese Aufgabe wird durch das erfindungsgemäße Verfahren zum Betreiben einer Geschirrspülmaschine mit den Merkmalen gemäß Anspruch 1 bzw. durch die erfindungsgemäße Geschirrspülmaschine gemäß Anspruch 11 gelöst. Vorteilhafte Weiterbildungen der Erfindung sind in den Unteransprüchen 2 bis 10 und 12 bis 13 gekennzeichnet.

Gemäß der vorliegenden Erfindung wird ein Verfahren bereitgestellt zum Betreiben einer Geschirrspülmaschine mit mindestens einem Spülbehälter, einer Umwälzpumpe zur Förderung von Spülflüssigkeit zu wenigstens einer Sprühvorrichtung zur Beaufschlagung von im Spülbehälter gelagertem, zu reinigendem Spülgut, einer Laugenpumpe zum Abpumpen von Spülflüssigkeit aus der Geschirrspülmaschine und mit einem zumindest aus den Teilprogrammschritten Vorspülen, Reinigen, Zwischenspülen, Klarspülen und Trocknen zusammensetzbaren Spülprogramm, wobei während eines Teilprogrammschritts zumindest zeitweise ein abwechselnder Betrieb zwischen der Umwälzpumpe und der Laugenpumpe vorgenommen wird.

Das erfindungsgemäße Verfahren ermöglicht es, insbesondere während der Reinigungsphasen des Spülprogramms die anfallenden Spülrückstände frühzeitig aus der Spülflüssigkeit zu entfernen und aus der Geschirrspülmaschine abzutransportieren. Wie nachfolgend detailliert beschrieben wird, werden dabei auch die Filtersysteme der Geschirrspülmaschine automatisch gereinigt, bevor es zu einer Überlastung der Filtersysteme kommen kann. Auf diese Weise kann die Reinigungsleistung der Geschirrspülmaschine verbessert und damit die Gesamtlaufzeit des Spülprogramms reduziert werden. Ein weiterer Vorteil der vorliegenden Erfindung besteht darin, dass aufgrund der Vermeidung von Beeinträchtigungen im Kreislauf der Spülflüssigkeit und der Reduzierung der Gesamtlaufzeit des Spülprogramms eine möglichst große Einsparung der für den Betrieb der Geschirrspülmaschine erforderlichen Energie bei optimaler Spülleistung erreicht wird.

Während des Spülbetriebs wird die Spülflüssigkeit von der Umwälzpumpe in der Geschirrspülmaschine zu den Sprühvorrichtungen befördert, um Wasserstrahlen zur Reinigung des Spülguts zu erzeugen. Anschließend fließt die Spülflüssigkeit in der Umwälzrichtung durch ein Filtersystem, wobei sich in der Spülflüssigkeit mitgeführte Spülrückstände an den Sieboberflächen des Filtersystems ablagern. Während eines Abpumpvorgangs, bei dem die Spülflüssigkeit über die Laugenpumpe aus der Geschirrspülmaschine befördert wird, ist die Strömungsrichtung der Spülflüssigkeit im Filtersystem der Umwälzrichtung entgegengesetzt und die Sieboberflächen des Filtersystems werden von der Spülflüssigkeit in der entgegengesetzten Richtung durchflossen. Dabei werden die abgelagerten Spülrückstände von den Sieboberflächen gelöst und zusammen mit der verbrauchten Spülflüssigkeit über die Laugenpumpe abgepumpt. Auf diese Weise wird das Filtersystem gereinigt und dessen Filterfunktion wiederhergestellt. Bei dem erfindungsgemäßen Verfahren werden folglich durch den abwechselnden Betrieb zwischen Umwälzpumpe und Laugenpumpe während eines Teilprogrammschritts einerseits die Menge der Spülrückstände in der Spülflüssigkeit auf effektive Weise reduziert und andererseits wird der für den Spülbetrieb erforderliche Energieaufwand möglichst gering gehalten.

Darüber hinaus wird während eines Teilprogrammschritts zumindest zeitweise ein gleichzeitiger Betrieb der Umwälzpumpe und der Laugenpumpe durchgeführt. Das bedeutet, dass während des Abpumpens der Spülflüssigkeit aus der Geschirrspülmaschine die Umwälzpumpe zumindest zeitweise betrieben wird. Durch den Betrieb der Umwälzpumpe und damit der Sprühvorrichtungen werden zum einen die in der Geschirrspülmaschine verteilten Spülrückstände im Pumpentopf der Geschirrspülmaschine zusammengetragen und vom Filtersystem aufgefangen. Zum anderen wird die Filteranordnung durch den Betrieb der Laugenpumpe gereinigt und die Spülrückstände über die Laugenpumpe aus der Geschirrspülmaschine befördert.

Bei dem erfindungsgemäßen Verfahren kann auch vorgesehen sein, dass während eines Teilprogrammschritts zumindest zeitweise durch Öffnung eines Füllventils dem Spülflüssigkeitskreislauf Frischwasser zugeführt wird. Die Öffnung des Füllventils zur Zufuhr von Frischwasser kann dabei zumindest zeitweise auch während des Betriebs der Umwälzpumpe erfolgen. Dadurch kann beispielsweise verhindert werden, dass die Spülflüssigkeitsmenge im Laufe des Teilprogrammschritts zu gering oder die Konzentration der Spülrückstände in der Spülflüssigkeit zu hoch wird. In einer weiteren Ausführungsform des erfindungsgemäßen Verfahrens wird das Füllventil zumindest zeitweise während des Betriebs der Laugenpumpe geöffnet, um Frischwasser in die Geschirrspülmaschine einzulassen. Auf diese Weise kann bei Bedarf auch während des Abpumpens von Spülflüssigkeit eine zusätzliche Spülung zur Reinigung des Filtersystems durchgeführt werden.

Besonders vorteilhaft ist es, wenn nicht nur am Ende eines Teilprogrammschritts, sondern bereits während eines Teilprogrammschritts zumindest zeitweise Spülflüssigkeit aus der Geschirrspülmaschine über die Laugenpumpe abgeführt wird. Dadurch kann das Filtersystem bereits während eines Teilprogrammschritts gereinigt, die Menge der in der Spülflüssigkeit enthaltenen Spülrückstände reduziert und der Gefahr einer Rückverschmutzung des Spülguts oder einer Verstopfung des Filtersystems entgegengewirkt werden.

Die Geschirrspülmaschine kann nach dem erfindungsgemäßen Verfahren auch so betrieben werden, dass die Umwälzpumpe während des Einlassens der für einen Teilprogrammschritt, insbesondere den Vorspülgang oder den Klarspülgang verwendeten Spülflüssigkeit in die Geschirrspülmaschine zumindest zeitweise betrieben wird. Während des Einlassens der Spülflüssigkeit in die Geschirrspülmaschine, ist die für einen Spülgang erforderliche Spülflüssigkeit noch nicht vollständig in die Geschirrspülmaschine eingeleitet, was bedeutet, dass sich der Flüssigkeitspegel der Spülflüssigkeit noch auf einem geringen Niveau befindet. Das hat zur Folge, dass die Umwälzpumpe während des Einlassens der Spülflüssigkeit in die Geschirrspülmaschine neben der Spülflüssigkeit auch teilweise Luft einzieht und infolgedessen einen geringeres Volumen an Spülflüssigkeit fördert, als wenn der Flüssigkeitspegel der Spülflüssigkeit in der Geschirrspülmaschine auf einem höheren oder maximalen Niveau steht. Die reduzierte Förderleistung der Umwälzpumpe hat wiederum zur Folge, dass der durch die Sprühvorrichtungen auf das Spülgut einwirkende Wasserstrahl weniger intensiv ist und das Ablösen der Speisereste vom Spülgut über eine größere Zeitspanne verteilt wird, wodurch eine Überlastung der Filtersysteme vermieden werden kann.

Ein ähnlicher Effekt kann erreicht werden, wenn die für einen Teilprogrammschritt verwendete Menge an Spülflüssigkeit während des betreffenden Teilprogrammschritts sukzessive reduziert wird. Aufgrund des oben beschriebenen Effekts, dass die Umwälzpumpe bei einem geringen Flüssigkeitspegel der Spülflüssigkeit in der Geschirrspülmaschine neben der Spülflüssigkeit auch teilweise Luft einzieht und infolgedessen einen geringeres Volumen an Spülflüssigkeit fördert, kann mit der Variierung des Spülflüssigkeitspegels in der Geschirrspülmaschine auf einfache Weise die Förderleistung der Umwälzpumpe und damit die Intensität des von der Umwälzpumpe über die Sprühvorrichtungen erzeugten Wasserstrahls verändert werden. Durch den abwechselnden Betrieb der Umwälzpumpe und der Laugenpumpe nach dem erfindungsgemäßen Verfahren ohne zwischenzeitliche Zufuhr von Frischwasser bis die Spülflüssigkeit im wesentlichen vollständig aus der Geschirrspülmaschine abgepumpt ist, kann sichergestellt werden, dass die während des Teilprogrammschritts angefallenen Spülrückstände im wesentlichen vollständig aus der Geschirrspülmaschine befördert werden, bevor der nächste Teilprogrammschritt des Spülprogramms bzw. ein neues Spülprogramm beginnt.

Eine Variierung des Spülflüssigkeitspegels in der Geschirrspülmaschine kann beispielsweise durch die Zufuhr von Frischwasser erfolgen, was eine Erhöhung des Spülflüssigkeitspegels bewirkt. Zur Erniedrigung des Spülflüssigkeitspegels wird vorzugsweise die Laugenpumpe zum Abpumpen von Spülflüssigkeit aus der Geschirrspülmaschine während eines Teilprogrammschritts zumindest zeitweise betrieben. Dazu kann die Laugenpumpe im Laufe eines Teilprogrammschritts entweder in Intervallen oder kontinuierlich und solange betrieben werden, bis die Spülflüssigkeit im wesentlichen vollständig aus der Geschirrspülmaschine abgepumpt ist, so dass am Ende des jeweiligen Teilprogrammschritts im wesentlichen kein Spülflüssigkeit mehr in der Geschirrspülmaschine vorhanden ist. Auf diese Weise werden die während eines Teilprogrammschritt anfallenden Spülrückstände schon während des betreffenden Teilprogrammschritts aus der Geschirrspülmaschine befördert. Ein besonders gutes Spülergebnis lässt sich daher erzielen, wenn nach jedem Teilprogrammschritt mit Spülflüssigkeitseinsatz ein im wesentlichen vollständiger Spülflüssigkeitswechsel vorgenommen wird.

Bei einer weiteren bevorzugten Ausführungsform der vorliegenden Erfindung ist die Umdrehungszahl und damit auch die Leistung der Umwälzpumpe zur Förderung von Spülflüssigkeit variierbar. Dazu wird die elektrische Umwälzpumpe beispielsweise mit einem Antriebsstrom unterschiedlicher Leistung versorgt, so dass die Umwälzpumpe dementsprechend unterschiedliche Umdrehungszahlen erzeugt. Dies hat zur Folge, dass die Umwälzpumpe unterschiedliche Mengen an Spülflüssigkeit zu der Sprühvorrichtung fördert und damit die Intensität des durch die Sprühvorrichtungen auf das Spülgut einwirkenden Wasserstrahls variierbar ist.

Mit dieser bevorzugten Ausführungsform des erfindungsgemäßen Verfahrens kann beispielsweise zu Beginn der Vorspülphase die Umwälzpumpe mit einer niedrigen Umdrehungszahl betrieben werden, so dass der durch die Sprühvorrichtung auf das Spülgut einwirkende Wasserstrahl weniger intensiv ist. Dadurch wird das Ablösen der Speisereste vom Spülgut besonders während der Vorspülphase über eine größere Zeitspanne verteilt, da Spitzenaufkommen von Spülrückständen in der Spülflüssigkeit reduziert bzw. abgeflacht werden, so dass die Filtersysteme in der Geschirrspülmaschine nicht überlastet werden. Die Erzeugung eines mit geringerer Intensität auf das Spülgut einwirkenden Wasserstrahls kann auch während des Klarspülgangs wünschenswert sein, da hierbei das Spülgut lediglich mit Klarspülmittel benetzt werden soll.

Im Folgenden wird die vorliegende Erfindung anhand bevorzugter Ausführungsbeispiele unter Bezugnahme auf die beigefügten Zeichnungen näher erläutert. Es zeigen:
- Figur 1: eine Schnittdarstellung eines Filtersystems, wie es zur Reinigung der Spülflüssigkeit in einer Geschirrspülmaschine nach dem Stand der Technik verwendet wird;
- Figur 2: ein Diagramm zur Darstellung des Aufkommens von Spülrückständen in der Spülflüssigkeit im Zusammenhang mit dem Betrieb der Laugenpumpe, der Umwälzpumpe und des Füllventils bei einem Verfahren zum Betreiben einer Geschirrspülmaschine nach der vorliegenden Erfindung gemäß einer ersten bevorzugten Ausführungsform;
- Figur 3: ein Diagramm zur Darstellung des Aufkommens von Spülrückständen in der Spülflüssigkeit im Zusammenhang mit dem Betrieb der Laugenpumpe, der Umwälzpumpe und des Füllventils bei einem Verfahren zum Betreiben einer Geschirrspülmaschine nach der vorliegenden Erfindung gemäß einer zweiten bevorzugten Ausführungsform;
- Figur 4: eine schematische Darstellung eines Verfahrens zum Betreiben einer Geschirrspülmaschine nach der vorliegenden Erfindung gemäß einer dritten bevorzugten Ausführungsform.

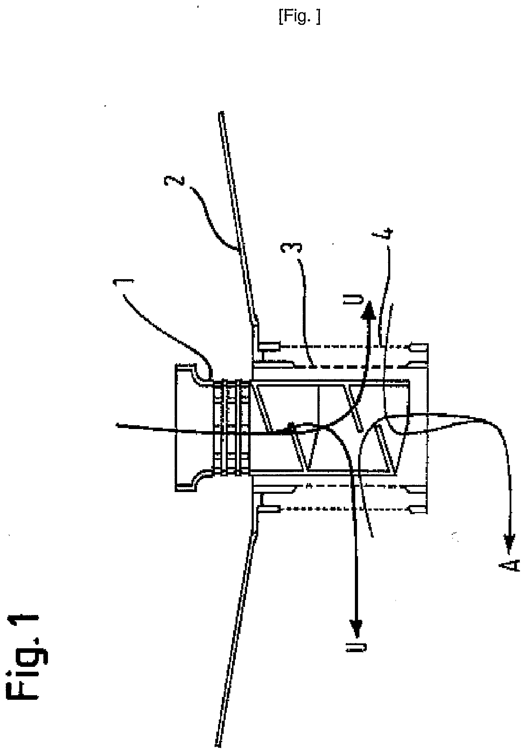

Das in Figur 1 gezeigte Filtersystem umfasst ein im wesentlichen zylinderförmiges Grobsieb 1 sowie ein flaches Feinsieb 2, das kragenartig um den oberen Teil des zylinderförmigen Grobsiebs 1 herum angeordnet ist. Der untere Teil des Grobsiebs 1 ist von einem Feinsiebzylinder 3 und dieser von einem Mikrosiebzylinder 4 umgeben. Ein solches Filtersystem zur Reinigung der Spülflüssigkeit ist in der Regel im unteren Teil des Spülbehälters (nicht dargestellt) oberhalb des Pumpentopfes der Geschirrspülmaschine angeordnet und bildet dabei häufig den Boden des Spülbehälters.

Während des Spülbetriebs wird die Spülflüssigkeit von der Umwälzpumpe in der Geschirrspülmaschine zu den Sprühvorrichtungen befördert, um Wasserstrahlen zur Reinigung des Spülguts zu erzeugen. Die Spülflüssigkeit sammelt sich am Boden des Spülbehälters, fließt in der Umwälzrichtung U über das Feinsieb 2 in das Innere des zylinderförmigen. Grobsiebs 1 und anschließend durch die Sieboberflächen des Feinsiebzylinders 3 und des Mikrozylinders 4 wieder nach außen in den Pumpentopf der Geschirrspülmaschine. Dabei lagern sich in der Spülflüssigkeit mitgeführte Spülrückstände an der Innenseiten der zylinderförmigen Sieboberflächen der einzelnen Siebe 1, 3, 4 ab. Während eines Abpumpvorgangs, bei dem die Spülflüssigkeit über die Laugenpumpe aus der Geschirrspülmaschine befördert wird, ist die Strömungsrichtung A der Spülflüssigkeit im Filtersystem der Umwälzrichtung U entgegengesetzt und die Spülflüssigkeit fließt von außen durch die Sieboberflächen des Mikrozylinders 4, des Feinsiebzylinders 3 und des Grobsiebs 1 in das Innere des zylinderförmigen Filtersystems und wird von dort durch eine Öffnung im unteren Teil des Filtersystems über die Laugenpumpe abgepumpt. Dabei werden abgelagerte Spülrückstände von den Sieboberflächen gelöst und zusammen mit der verbrauchten Spülflüssigkeit über die Laugenpumpe aus der Geschirrspülmaschine befördert. Dadurch wird das Filtersystem gereinigt und dessen Filterfunktion wiederhergestellt.

Nach dem erfindungsgemäßen Verfahren wird folglich durch den abwechselnden Betrieb zwischen Umwälzpumpe und Laugenpumpe während eines Teilprogrammschritts zwischen Umwälzbetrieb und Abpumpbetrieb gewechselt. Dadurch werden einerseits während des Umwälzbetriebs die Menge der Spülrückstände in der Spülflüssigkeit durch die Filterfunktion des Filtersystems reduziert und andererseits im Abpumpbetrieb noch während eines Teilprogrammschritts das Filtersystem gereinigt und dabei die Spülrückstände aus der Geschirrspülmaschine befördert.

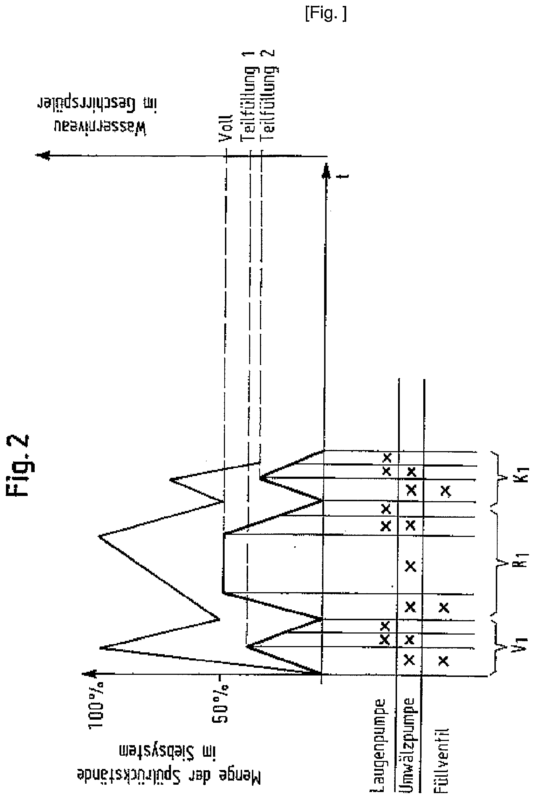

Figur 2 zeigt ein Diagramm zur Darstellung des Aufkommens von Spülrückständen in der Spülflüssigkeit im Zusammenhang mit dem Betrieb der Laugenpumpe, der Umwälzpumpe und des Füllventils bei einem Verfahren zum Betreiben einer Geschirrspülmaschine nach der vorliegenden Erfindung gemäß einer ersten bevorzugten Ausführungsform. In dem Diagramm von Figur 2 ist auf der X-Achse die Zeit t und auf der Y-Achse die Menge der Spülrückstände in der Spülflüssigkeit von 0% bis 100% aufgetragen. Das Diagramm von Figur 2 enthält ferner eine Kurve, die den zeitlichen Verlauf der Menge an Spülrückständen in der Spülflüssigkeit im Laufe des Spülprogramms einer Geschirrspülmaschine nach der vorliegenden Erfindung gemäß einer ersten bevorzugten Ausführungsform darstellt.

Das Spülprogramm dieser Ausführungsform umfasst drei Teilprogrammschritte, wie z.B. Vorspülen V₁, Reinigen R₁ und Klarspülen K₁, wobei die einzelnen Teilprogrammschritte V₁, R₁, K₁ durch senkrechte Striche in mehrere Unterabschnitte unterteilt sind. Im Verlauf der Teilprogrammschritte V₁, R₁, K₁ können Laugenpumpe, Umwälzpumpe und Füllventil der Geschirrspülmaschine je nach Programmablauf aktiviert bzw. geöffnet oder deaktiviert bzw. geschlossen sein. Der Betrieb der Laugenpumpe, der Umwälzpumpe und des Füllventils ist jeweils durch Kreuze (X) in einer Matrix im unteren Teil des Diagramms gekennzeichnet, die aus den senkrechten Strichen zur Unterteilung der Unterabschnitte der Teilprogrammschritte V₁, R₁, K₁ und den waagrechten Strichen zur Unterscheidung des Betriebs der Laugenpumpe, der Umwälzpumpe und des Füllventils gebildet wird. Ein Kreuz in der Zeile der Laugenpumpe kennzeichnet den Betrieb der Laugenpumpe und damit einen Abpumpbetrieb innerhalb des betreffenden Unterabschnitts des Teilprogrammschritts V₁, R₁, K₁. Ein Kreuz in der Zeile der Umwälzpumpe kennzeichnet den Betrieb der Umwälzpumpe und damit einen Umwälzbetrieb innerhalb des betreffenden Unterabschnitts des Teilprogrammschritts V₁, R₁, K₁. Ein Kreuz in der Zeile des Füllventils kennzeichnet den geöffneten Zustand des Füllventils und damit die Zufuhr von Frischwasser in die Geschirrspülmaschine während des betreffenden Unterabschnitts des Teilprogrammschritts V₁, R₁, K₁, wobei das Füllventil zu allen übrigen Zeiten verschlossen ist und dabei keine Zufuhr von Frischwasser erfolgt.

Wie Figur 2 zu entnehmen ist, beginnt das Verfahren zum Betreiben einer Geschirrspülmaschine nach einer ersten bevorzugten Ausführungsform der Erfindung mit dem Teilprogrammschritt Vorspülen V₁ und dem gleichzeitigen Betrieb von Umwälzpumpe und Füllventil. Ebenso beginnen die Teilprogrammschritte Reinigen R₁ und Klarspülen K₁ mit dem gleichzeitigen Betrieb von Umwälzpumpe und Füllventil. Das heißt, die Geschirrspülmaschine wird so betrieben, dass die Umwälzpumpe während des Einlassens der für den Vorspülgang, den Reinigungsgang R₁ oder den Klarspülgang K₁ verwendeten Spülflüssigkeit in die Geschirrspülmaschine zumindest zeitweise betrieben wird. Während des Einlassens der Spülflüssigkeit in die Geschirrspülmaschine, ist die für einen Teilprogrammschritt V₁, R₁, K₁ erforderliche Spülflüssigkeit noch nicht vollständig in die Geschirrspülmaschine eingeleitet, was bedeutet, dass sich der Flüssigkeitspegel der Spülflüssigkeit noch auf einem geringen Niveau befindet. Das hat zur Folge, dass die Umwälzpumpe während des Einlassens der Spülflüssigkeit in die Geschirrspülmaschine neben der Spülflüssigkeit auch teilweise Luft einzieht und infolgedessen einen geringeres Volumen an Spülflüssigkeit fördert, als wenn der Flüssigkeitspegel der Spülflüssigkeit in der Geschirrspülmaschine auf einem höheren oder maximalen Niveau steht. Die reduzierte Förderleistung der Umwälzpumpe hat wiederum zur Folge, dass der durch die Sprühvorrichtungen auf das Spülgut einwirkende Wasserstrahl weniger intensiv ist und das Ablösen der Speisereste vom Spülgut über eine größere Zeitspanne verteilt wird, wodurch eine Überlastung der Filtersysteme vermieden werden kann.
Zu Beginn eines jeden Teilprogrammschritts V₁, R₁, K₁ mit Spülflüssigkeitseinsatz werden die Spülrückstände verhältnismäßig schnell vom Spülgut gelöst, was einen Anstieg der Menge der Spülrückstände in der Spülflüssigkeit zur Folge hat. Im weiteren Verlauf des Spülprogramms werden sind die Laugenpumpe und die Umwälzpumpe zumindest zeitweise gleichzeitig aktiviert. Das bedeutet, dass während des Umwälzbetriebs auch teilweise Spülflüssigkeit aus der Geschirrspülmaschine befördert wird. Durch den Betrieb der Umwälzpumpe und damit der Sprühvorrichtungen werden zum einen die in der Geschirrspülmaschine verteilten Spülrückstände im Pumpentopf der Geschirrspülmaschine zusammengetragen und vom Filtersystem aufgefangen. Zum anderen wird die Filteranordnung durch den Betrieb der Laugenpumpe gereinigt und die Spülrückstände über die Laugenpumpe aus der Geschirrspülmaschine befördert. Dadurch werden insbesondere während der Reinigungsphasen V₁, R₁, K₁ des Spülprogramms die anfallenden Spülrückstände frühzeitig aus der Spülflüssigkeit entfernt und aus der Geschirrspülmaschine abtransportiert. Dieser Effekt ist durch die im jeweils letzten Teil eines Teilprogrammschritts V₁, R₁, K₁ abfallende Kurve der Menge der Spülrückstände in der Spülflüssigkeit dargestellt. Wie oben beschrieben, wird dabei auch das Filtersystem der Geschirrspülmaschine automatisch gereinigt, bevor es zu einer Überlastung der Filtersysteme kommen kann.

In noch einem Unterabschnitt des Teilprogrammschritts Reinigen R₁ ist lediglich die Umwälzpumpe in Betrieb. Das heißt, dass während der Hauptreinigungsphase ein reiner Umwälzbetrieb stattfindet. Im jeweils letzten Unterabschnitt eines Teilprogrammschritts V₁, R₁, K₁ wird lediglich die Laugenpumpe aktiviert, da in diesem Unterabschnitt des Spülprogramms die verbrauchte Spülflüssigkeit vorzugsweise vollständig aus der Geschirrspülmaschine befördert werden soll.

Durch den Betrieb der Laugenpumpe noch während eines Teilprogrammschritts V₁, R₁, K₁ wird die für den betreffenden Teilprogrammschritt verwendete Menge an Spülflüssigkeit während des betreffenden Teilprogrammschritts sukzessive reduziert. Durch das sukzessive Abpumpen der Spülflüssigkeit und den abwechselnden Betrieb der Umwälzpumpe und der Laugenpumpe ohne zwischenzeitliche Zufuhr von Frischwasser bis die Spülflüssigkeit im wesentlichen vollständig aus der Geschirrspülmaschine abgepumpt ist, können die während des Teilprogrammschritts angefallenen Spülrückstände im wesentlichen vollständig aus der Geschirrspülmaschine befördert werden, bevor der nächste Teilprogrammschritt des Spülprogramms oder ein neues Spülprogramm beginnt.

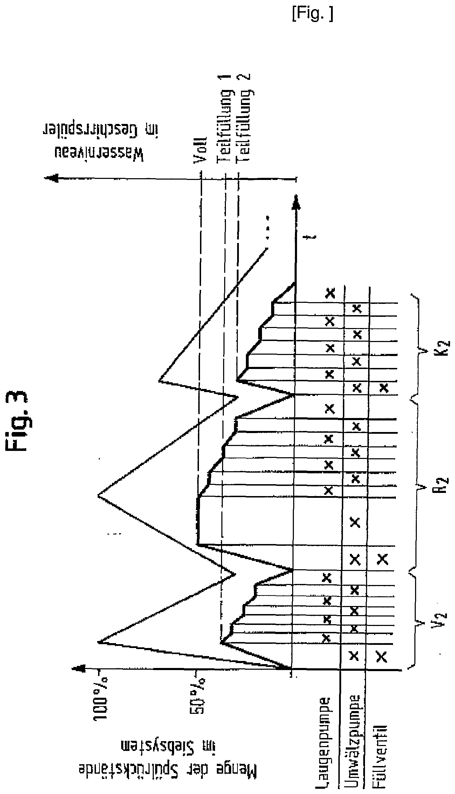

Figur 3 zeigt ein Diagramm zur Darstellung des Aufkommens von Spülrückständen in der Spülflüssigkeit im Zusammenhang mit dem Betrieb der Laugenpumpe, der Umwälzpumpe und des Füllventils bei einem Verfahren zum Betreiben einer Geschirrspülmaschine nach der vorliegenden Erfindung gemäß einer zweiten bevorzugten Ausführungsform. In dem Diagramm von Figur 3 ist auf der X-Achse die Zeit t und auf der Y-Achse die Menge der Spülrückstände in der Spülflüssigkeit von 0% bis 100% aufgetragen. Das Diagramm von Figur 3 enthält eine Kurve, die den zeitlichen Verlauf der Menge an Spülrückständen in der Spülflüssigkeit im Laufe des Spülprogramms einer Geschirrspülmaschine nach der vorliegenden Erfindung gemäß einer zweiten bevorzugten Ausführungsform darstellt.

Das in Figur 3 dargestellte Verfahren zum Betreiben einer Geschirrspülmaschine nach der vorliegenden Erfindung entspricht in einigen Merkmalen dem in Figur 2 dargestellten Verfahren. Das Spülprogramm dieser zweiten Ausführungsform umfasst wiederum drei Teilprogrammschritte, wie z.B. Vorspülen V₂, Reinigen R₂ und Klarspülen K₂, wobei die einzelnen Teilprogrammschritte V₂, R₂, K₂ durch senkrechte Striche in mehrere Unterabschnitte unterteilt sind. Im Verlauf der Teilprogrammschritte V₂, R₂, K₂ können Laugenpumpe, Umwälzpumpe und Füllventil der Geschirrspülmaschine je nach Programmablauf aktiviert bzw. geöffnet oder deaktiviert bzw. geschlossen sein. Der Betrieb der Laugenpumpe, der Umwälzpumpe und des Füllventils ist jeweils durch Kreuze (X) in einer Matrix im unteren Teil des Diagramms gekennzeichnet, die aus den senkrechten Strichen zur Unterteilung der Unterabschnitte der Teilprogrammschritte V₂, R₂, K₂ und den waagrechten Strichen zur Unterscheidung des Betriebs der Laugenpumpe, der Umwälzpumpe und des Füllventils gebildet wird. Ein Kreuz in der Zeile der Laugenpumpe kennzeichnet den Betrieb der Laugenpumpe und damit einen Abpumpbetrieb innerhalb des betreffenden Unterabschnitts des Teilprogrammschritts V₂, R₂, K₂. Ein Kreuz in der Zeile der Umwälzpumpe kennzeichnet den Betrieb der Umwälzpumpe und damit einen Umwälzbetrieb innerhalb des betreffenden Unterabschnitts des Teilprogrammschritts V₂, R₂, K₂. Ein Kreuz in der Zeile des Füllventils kennzeichnet den geöffneten Zustand des Füllventils und damit die Zufuhr von Frischwasser in die Geschirrspülmaschine während des betreffenden Unterabschnitts des Teilprogrammschritts V₂, R₂, K₂, wobei das Füllventil zu allen übrigen Zeiten verschlossen ist und dabei keine Zufuhr von Frischwasser erfolgt.

Das in Figur 3 dargestellte Verfahren beginnt, so wie das in Figur 2 dargestellte Verfahren, im Teilprogrammschritt Vorspülen V₂ mit dem gleichzeitigen Betrieb von Umwälzpumpe und Füllventil. Ebenso beginnen die Teilprogrammschritte Reinigen R₂ und Klarspülen K₂ mit dem gleichzeitigen Betrieb von Umwälzpumpe und Füllventil. Das heißt, die Geschirrspülmaschine wird so betrieben, dass die Umwälzpumpe während des Einlassens der für den Vorspülgang V₂, den Reinigungsgang R₂ oder den Klarspülgang K₂ verwendeten Spülflüssigkeit in die Geschirrspülmaschine zumindest zeitweise betrieben wird. Während des Einlassens der Spülflüssigkeit in die Geschirrspülmaschine, ist die für einen Spülgang erforderliche Spülflüssigkeit noch nicht vollständig in die Geschirrspülmaschine eingeleitet, was den oben bereits zu Figur 2 beschriebenen Effekt hat.

Zu Beginn eines jeden Teilprogrammschritts V₂, R₂, K₂ mit Spülflüssigkeitseinsatz werden die Spülrückstände verhältnismäßig schnell vom Spülgut gelöst, was einen Anstieg der Menge der Spülrückstände in der Spülflüssigkeit zur Folge hat. Im weiteren Verlauf der Teilprogrammschritte V₂, R₂, K₂ werden die Laugenpumpe und die Umwälzpumpe abwechselnd betrieben, das heißt Umwälzbetrieb und Abpumpbetrieb wechseln sich einander ab. Dadurch werden insbesondere während der Reinigungsphasen des Spülprogramms die anfallenden Spülrückstände frühzeitig aus der Spülflüssigkeit entfernt und aus der Geschirrspülmaschine ausgetragen. Dieser Effekt ist durch die im jeweils letzten Teil eines Teilprogrammschritts V₂, R₂, K₂ stufenweise abfallende Kurve der Menge der Spülrückstände in der Spülflüssigkeit dargestellt. Wie oben beschrieben, wird dabei auch das Filtersystem der Geschirrspülmaschine automatisch gereinigt.

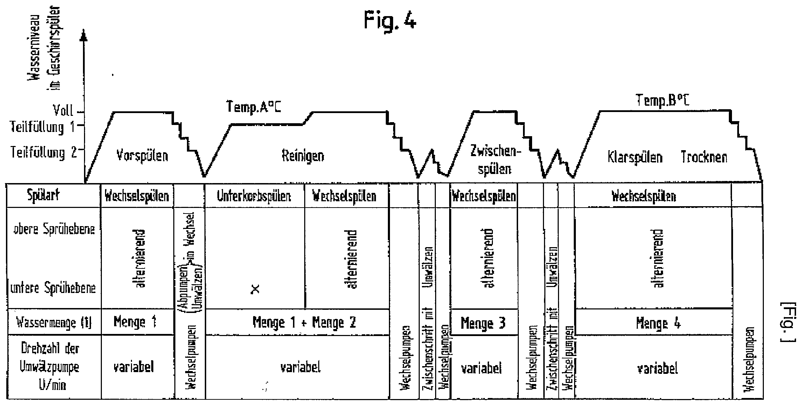

Figur 4 ist eine schematische Darstellung eines Verfahrens zum Betreiben einer Geschirrspülmaschine nach der vorliegenden Erfindung gemäß einer dritten bevorzugten Ausführungsform. Im oberen Teil von Figur 4 ist eine Kurve wiedergegeben, die den zeitlichen Verlauf der Menge an Spülrückständen in der Spülflüssigkeit im Laufe des Spülprogramms einer Geschirrspülmaschine nach der vorliegenden Erfindung gemäß einer zweiten bevorzugten Ausführungsform darstellt.

Die Geschirrspülmaschine, die für die Ausführung dieser dritten Ausführungsform geeignet ist, hat die Besonderheit, dass mehrere Sprühvorrichtungen für eine obere und eine Sprühebene vorgesehen sind, die gleichzeitig oder abwechselnd mit Spülflüssigkeit von der Umwälzpumpe versorgt werden können. Darüber hinaus verfügt diese Geschirrspülmaschine über eine Umwälzpumpe, die mit unterschiedlicher Förderleistung betrieben werden kann. Indem ferner separate Spülflüssigkeitsleitungen von der Umwälzpumpe zu den einzelnen Sprühvorrichtungen vorgesehen sind, kann die Spülflüssigkeit über die Umwälzpumpe zu den einzelnen Sprühvorrichtungen mit unterschiedlicher Förderleistung gefördert werden. Dadurch können beispielsweise innerhalb eines Speicherbehälters je nach Empfindlichkeit des Spülguts in verschiedenen Sprühebenen unterschiedlich starke Wasserstrahlen erzeugt werden.

Wie aus Figur 4 zu entnehmen ist, setzt sich das Verfahren zum Betreiben einer Geschirrspülmaschine nach einer bevorzugten Ausführungsform der Erfindung aus den Teilprogrammschritten Vorspülen, Reinigen, Zwischenspülen, Klarspülen und Trocknen zusammen. Während der Vorspülphase wird bei einer Wassermenge von 3,3 Litern die Umwälzpumpe mit variabler und teilweise mit geringerer als die maximale Leistung betrieben, nämlich für die obere Sprühebene 50 Sekunden lang mit 2100 U/min und für die untere Sprühebene 60 Sekunden lang mit 2800 U/min. Das erfindungsgemäße Verfahren zum Betrieb von Geschirrspülmaschinen in der dritten Ausführungsform hat somit den Vorteil, dass die Einwirkung des durch die Sprühvorrichtungen auf das Spülgut einwirkenden Wasserstrahls nicht immer mit maximaler, sondern mit reduzierter bzw. variierbarer Stärke erfolgt. Daraus ergibt sich der Vorteil, dass Spitzenaufkommen von Spülrückständen in der Spülflüssigkeit, insbesondere während der Vorspülphase über eine größere Zeitspanne gestreckt werden, so dass die Filtersysteme in der Geschirrspülmaschine nicht überlastet sind und die Reinigungseffekte zum Erhalt der Funktionsfähig der Filtersysteme ausreichen.

Nach dem Vorspülgang folgt ein Zwischengang mit Wechselpumpen, bei dem die Laugenpumpe und die Umwälzpumpe abwechselnd jeweils 5 Sekunden lang betrieben werden, das heißt Umwälzbetrieb und Abpumpbetrieb wechseln sich einander ab. Dadurch werden insbesondere während der Reinigungsphasen des Spülprogramms die anfallenden Spülrückstände frühzeitig aus der Spülflüssigkeit entfernt und aus der Geschirrspülmaschine ausgetragen. Dieser Effekt ist durch die während des Zwischengangs mit Wechselpumpen stufenweise abfallende Kurve der Menge der Spülrückstände in der Spülflüssigkeit dargestellt. Wie oben beschrieben, wird dabei auch das Filtersystem der Geschirrspülmaschine automatisch gereinigt.

Dem Zwischengang mit Wechselpumpen folgt der Hauptreinigungsgang, in dessen Verlauf die Temperatur der Spülflüssigkeit von vorher 50° auf 60° erhöht wird. Während des Hauptreinigungsgangs wird die Umwälzpumpe mit voller oder zumindest mit gleicher Leistung bei 2800 U/min betrieben, wobei die Sprühebenen unterschiedlich lange und zeitweise auch nur eine Sprühebene mit Spülflüssigkeit versorgt wird. Nach dem Hauptreinigungsgang folgt wieder ein Zwischengang mit Wechselpumpen, bei dem die Laugenpumpe und die Umwälzpumpe abwechselnd jeweils 5 Sekunden lang betrieben werden. Dabei werden wieder die im Hauptreinigungsgang angefallenen Spülrückstände aus der Spülflüssigkeit entfernt und aus der Geschirrspülmaschine ausgetragen.

Anschließend kann ein Zwischenschritt eingefügt werden, bei dem nur eine geringe Menge an Spülflüssigkeit, z.B. etwa 1 Liter, vorzugsweise über beide Sprühvorrichtungen umgewälzt wird. Darauf kann wieder ein Zwischengang mit Wechselpumpen folgen. Durch diese Zwischenschritte können Spülrückstände weitgehend vollständig aus der Geschirrspülmaschine ausgetragen werden. Wie Figur 4 zu entnehmen ist, können weitere Teilprogrammschritte folgen, wobei sich die Teilprogrammschritt in einigen Details unterscheiden können, wie z.B. in der Menge der für die jeweilige Spülflotte verwendeten Spülflüssigkeit, der Förderleistung der Umwälzpumpe und der Dauer des Betriebs der einzelnen Sprühvorrichtungen. Vorteilhafterweise erfolgt auch bei der in Figur 4 dargestellten Ausführungsform des erfindungsgemäßen Verfahrens am Ende eines jeden Teilprogrammschritts mit Spülflüssigkeitseinsatz sowie am Ende der Zwischenschritte mit Wechselpumpen ein vollständiges Abpumpen der Spülflüssigkeit und damit ein vollständiger Austausch der Spülflotte.

### Liste der Bezugszeichen

- 1: Grobsieb
- 2: Feinsieb
- 3: Feinsiebzylinder
- 4: Mikrozylinder
- 5 A: Fließrichtung der Spülflüssigkeit beim Abpumpbetrieb (Abpumprichtung)
- U: Fließrichtung der Spülflüssigkeit beim Umwälzbetrieb (Umwälzrichtung)

## Patentansprüche

1. Verfahren zum Betreiben einer Geschirrspülmaschine mit mindestens einem Spülbehälter, einer Umwälzpumpe zur Förderung von Spülflüssigkeit zu wenigstens einer Sprühvorrichtung zur Beaufschlagung von im Spülbehälter gelagertem, zu reinigendem Spülgut, einer Laugenpumpe zum Abpumpen von Spülflüssigkeit aus der Geschirrspülmaschine und mit einem zumindest aus den Teilprogrammschritten Vorspülen (V₁, V₂), Reinigen (R₁, R₂), Zwischenspülen, Klarspülen (K₁, K₂) und Trocknen zusammensetzbaren Spülprogramm, wobei während eines Teilprogrammschritts (V₁, V₂, R₁, R₂, K₁, K₂) zumindest zeitweise ein abwechselnder Betrieb zwischen der Umwälzpumpe und der Laugenpumpe vorgenommen wird, **dadurch gekennzeichnet, dass** während eines Teilprogrammschritts (V₁, V₂, R₁, R₂, K₁, K₂) zumindest zeitweise ein gleichzeitiger Betrieb der Umwälzpumpe und der Laugenpumpe vorgenommen wird.

2. Verfahren nach Anspruch 1, wobei während eines Teilprogrammschritts (V₁, V₂, R₁, R₂, K₁, K₂) zumindest zeitweise Frischwasser zugeführt wird.

3. Verfahren nach einem der vorangehenden Ansprüche, wobei während des Betriebs der Umwälzpumpe gleichzeitig zumindest zeitweise das Füllventil geöffnet wird, um Frischwasser in die Geschirrspülmaschine einzulassen.

4. Verfahren nach einem der vorangehenden Ansprüche, wobei die Umwälzpumpe während des Einlassens der für einen Teilprogrammschritt (V₁, V₂, R₁, R₂, K₁, K₂) verwendeten Spülflüssigkeit in die Geschirrspülmaschine zumindest zeitweise betrieben wird.

5. Verfahren nach einem der vorangehenden Ansprüche, wobei während des Betriebs der Laugenpumpe gleichzeitig zumindest zeitweise das Füllventil geöffnet wird, um Frischwasser in die Geschirrspülmaschine einzulassen.

6. Verfahren nach einem der vorangehenden Ansprüche, wobei während eines Teilprogrammschritts (V₁, V₂, R₁, R₂, K₁, K₂) zumindest zeitweise Spülflüssigkeit aus der Geschirrspülmaschine vorzugsweise über die Laugenpumpe abgeführt wird.

7. Verfahren nach einem der vorangehenden Ansprüche, wobei die für einen Teilprogrammschritt (V₁, V₂, R₁, R₂, K₁, K₂) verwendete Menge an Spülflüssigkeit während des betreffenden Teilprogrammschritts (V₁, V₂, R₁, R₂, K₁, K₂) sukzessive reduziert wird.

8. Verfahren nach einem der vorangehenden Ansprüche, wobei im Laufe eines Teilprogrammschritts (V₁, V₂, R₁, R₂, K₁, K₂) die Spülflüssigkeit im wesentlichen vollständig aus der Geschirrspülmaschine vorzugsweise über die Laugenpumpe abgeführt wird.

9. Verfahren nach einem der vorangehenden Ansprüche, wobei nach jedem Teilprogrammschritt (V₁, V₂, R₁, R₂, K₁, K₂) mit Spülflüssigkeitseinsatz ein im wesentlichen vollständiger Spülflüssigkeitswechsel vorgenommen wird.

10. Verfahren nach einem der vorangehenden Ansprüche, wobei die Umdrehungszahl bzw. die Leistung der Umwälzpumpe zur Förderung von Spülflüssigkeit variierbar ist.

11. Geschirrspülmaschine, wobei ein Verfahren nach einem der vorangehenden Ansprüche zur Anwendung vorgesehen ist.

12. Geschirrspülmaschine nach Anspruch 11, wobei mindestens zwei Sprühvorrichtungen vorgesehen sind, die gleichzeitig oder abwechselnd mit Spülflüssigkeit von der Umwälzpumpe versorgt werden können.

13. Geschirrspülmaschine nach Anspruch 12, wobei die Spülflüssigkeit über die Umwälzpumpe zu den einzelnen Sprühvorrichtungen mit unterschiedlicher Förderleistung gefördert wird.

## Claims

1. Method for operating a dishwasher having at least one dishwasher cavity, a circulating pump for conveying washing fluid to at least one spray apparatus for applying to items to be washed stored in the dishwasher cavity, a drain pump for pumping away washing fluid from the dishwasher and having a wash program which can at least be composed at least of the subprogram steps pre-rinse (V₁, V₂), wash (R₁, R₂), intermediate rinse, rinsing with rinse-aid (K₁, K₂) and drying, wherein an alternating operation between the circulating pump and the drain pump is undertaken at least for a time during a subprogram step (V₁, V₂, R₁, R₂, K₁, K₂), **characterised in that** a simultaneous operation of the circulating pump and the drain pump is undertaken at least for a time during a subprogram step (V₁, V₂, R₁, R₂, K₁, K₂).

2. Method according to claim 1, wherein fresh water is fed at least for a time during a subprogram step (V₁, V₂, R₁, R₂, K₁, K₂).

3. Method according to one of the preceding claims, wherein the filling valve is opened simultaneously at least for a time during operation of the circulating pump, in order to admit fresh water into the dishwasher.

4. Method according to one of the preceding claims, wherein the circulating pump is operated at least for a time during the admission of the washing fluid used for a subprogram step (V₁, V₂, R₁, R₂, K₁, K₂) into the dishwasher.

5. Method according to one of the preceding claims, wherein the filling valve is opened simultaneously at least for a time during operation of the drain pump, in order to admit fresh water into the dishwasher.

6. Method according to one of the preceding claims, wherein washing fluid is discharged from the dishwasher, preferably via the drain pump, at least for a time during a subprogram step (V₁, V₂, R₁, R₂, K₁, K₂).

7. Method according to one of the preceding claims, wherein the quantity of washing fluid used for a subprogram step (V₁, V₂, R₁, R₂, K₁, K₂) is successively reduced during the subprogram step (V₁, V₂, R₁, R₂, K₁, K₂) in question.

8. Method according to one of the preceding claims, wherein the washing fluid is essentially completely discharged from the dishwasher, preferably via the drain pump, over the course of a subprogram step (V₁, V₂, R₁, R₂, K₁, K₂).

9. Method according to one of the preceding claims, wherein an essentially complete change of the washing fluid is undertaken after each subprogram step (V₁, V₂, R₁, R₂, K₁, K₂) with the introduction of washing fluid.

10. Method according to one of the preceding claims, wherein the number of rotations or the power of the circulating pump can be varied to convey washing fluid.

11. Dishwasher, wherein a method according to one of the preceding claims is provided for use.

12. Dishwasher according to claim 11, wherein at least two spray apparatuses are provided, which can be supplied with washing fluid by the circulating pump simultaneously or alternately.

13. Dishwasher according to claim 12, wherein the washing fluid is conveyed to the individual spray apparatuses via the circulating pump at different conveying powers.

## Revendications

1. Procédé de fonctionnement d'un lave-vaisselle comprenant au moins une cuve de lavage, une pompe de circulation destinée à transporter le liquide de lavage vers au moins un dispositif de pulvérisation destiné à alimenter des produits de lavage à nettoyer logés dans la cuve de lavage, une pompe de liquide de lavage destinée à pomper le liquide de lavage hors du lave-vaisselle, et comprenant un programme de lavage pouvant être composé des étapes de programme partiel prélavage (V₁, V₂), nettoyage (R₁, R₂), lavage intermédiaire, rinçage (K₁, K₂) et séchage, un fonctionnement alternant entre la pompe de circulation et la pompe de liquide de lavage étant réalisé au moins temporairement pendant une étape de programme partiel (V₁, V₂, R₁, R₂ K₁, K₂), **caractérisé en ce que** pendant une étape de programme partiel (V₁, V₂, R₁, R₂ K₁, K₂), un fonctionnement simultané de la pompe de circulation et de la pompe de liquide de lavage est réalisé au moins temporairement.

2. Procédé selon la revendication 1, de l'eau fraîche étant amenée au moins temporairement pendant une étape de programme partiel (V₁, V₂, R₁, R₂ K₁, K₂).

3. Procédé selon l'une quelconque des revendications précédentes, la soupape de remplissage étant ouverte au moins temporairement simultanément pendant le fonctionnement de la pompe de circulation afin de faire entrer de l'eau fraîche dans le lave-vaisselle.

4. Procédé selon l'une quelconque des revendications précédentes, la pompe de circulation fonctionnant au moins temporairement pendant l'entrée dans le lave-vaisselle du liquide de lavage utilisé pour une étape de programme partiel (V₁, V₂, R₁, R₂ K₁, K₂).

5. Procédé selon l'une quelconque des revendications précédentes, la soupape de remplissage étant ouverte au moins temporairement pendant le fonctionnement de la pompe de liquide de lavage afin de faire entrer de l'eau fraîche dans le lave-vaisselle.

6. Procédé selon l'une quelconque des revendications précédentes, du liquide de lavage étant évacué au moins temporairement hors du lave-vaisselle, de préférence par l'intermédiaire de la pompe de liquide de lavage, pendant une étape de programme partiel (V₁, V₂, R₁, R₂ K₁, K₂).

7. Procédé selon l'une quelconque des revendications précédentes, la quantité de liquide de lavage utilisée pour une étape de programme partiel (V₁, V₂, R₁, R₂ K₁, K₂) étant successivement réduite pendant l'étape de programme partiel concernée (V₁, V₂, R₁, R₂ K₁, K₂).

8. Procédé selon l'une quelconque des revendications précédentes, le liquide de lavage étant évacué essentiellement complètement hors du lave-vaisselle, de préférence par l'intermédiaire de la pompe de liquide de lavage, au cours d'une étape de programme partiel (V₁, V₂, R₁, R₂ K₁, K₂).

9. Procédé selon l'une quelconque des revendications précédentes, un changement de liquide de lavage essentiellement complet étant réalisé après chaque étape de programme partiel (V₁, V₂, R₁, R₂ K₁, K₂) avec utilisation de liquide de lavage.

10. Procédé selon l'une quelconque des revendications précédentes, le nombre de rotations, resp. la performance de la pompe de circulation, variant pour le transport de liquide de lavage.

11. Lave-vaisselle, un procédé selon l'une quelconque des revendications précédentes étant ménagé pour l'application.

12. Lave-vaisselle selon la revendication 11, au moins deux dispositifs de pulvérisation étant ménagés, lesquels sont alimentés simultanément ou en alternance en liquide de lavage par la pompe de circulation.

13. Lave-vaisselle selon la revendication 12, le liquide de lavage étant transporté par l'intermédiaire de la pompe de circulation vers les dispositifs de pulvérisation individuels avec une capacité de transport différente.
